# EUROPEAN PATENT APPLICATION

(11) **EP 4 617 110 A1**
(43) Date of publication of application: **17.09.2025**
(21) Application number: 24815648.1
(22) Date of filing: 05.01.2024
(51) Int. Cl.: B60L 53/62, B60L 53/10, B60L 58/12, H02M 3/06, H02M 3/08

(54) **VEHICLE SYSTEM, CHARGING SYSTEM, AND CHARGING GENDER**

(30) Priority: 26.05.2023 KR 20230068455
(71) Applicant: LG Energy Solution, Ltd., Seoul 07335 (KR)
(72) Inventor: PARK, Jongil, Daejeon 34122 (KR)
(74) Representative: Plasseraud IP
(86) International application number: PCT/KR2024/000253
(87) International publication number: WO 2024/248265

(57) **Abstract**

The present disclosure relates to a vehicle system, a charging system, and a charging gender, each including a power conversion device. The charging system for charging a battery mounted on the vehicle system, the charging system including: a charging unit supplying power to the battery; a power conversion circuit including a first variable resistor connected between a first output terminal and a ground, and a second variable resistor and a first switch connected in series to each other between the first output terminal and a first input terminal, the power conversion circuit converting a first voltage of the charging unit into a second voltage that is a rated voltage of the battery; and a charging control unit controlling a switching operation of the first switch, a magnitude of the first variable resistor, and a magnitude of the second variable resistor, wherein the first input terminal of the power conversion circuit is connected to a positive electrode of the charging unit, and the first output terminal of the power conversion circuit is connected to a positive electrode of the battery

## Description

### [Technical Field]

### CROSS-REFERENCE TO RELATED APPLICATION

This application claims priority to and the benefit of Korean Patent Application No. 10-2023-0068455 filed in the Korean Intellectual Property Office on May 26, 2023, the entire contents of which are incorporated herein by reference.

The present disclosure relates to a vehicle system, a charging system, and a charging gender, each including a power conversion device.

### [Background Art]

As electric vehicles become more common, charging systems for charging batteries of the electric vehicles are also becoming widely used. However, the rated power of the battery may vary depending on the type and brand of electric vehicle. In addition, the charging power may vary depending on the type and brand of charging system. A driver feels inconvenient because he/she has to find a charging system that matches the specifications of the battery mounted on his/her car. This has been pointed out as a problem that lowers consumers' motivation to purchase electric vehicles.

### [Disclosure]

### [Technical Problem]

The present disclosure attempts to provide a vehicle system, a charging system, and a charging gender capable of easily charging batteries between battery systems with batteries having various rated voltages and charging systems having various charging voltages.

### [Technical Solution]

An exemplary embodiment of the present disclosure provides a charging system for charging a battery mounted on a vehicle system, the charging system including: a charging unit supplying power to the battery; a power conversion circuit including a first variable resistor connected between a first output terminal and a ground, and a second variable resistor and a first switch connected in series to each other between the first output terminal and a first input terminal, the power conversion circuit converting a first voltage of the charging unit into a second voltage that is a driving voltage of the battery; and a charging control unit controlling a switching operation of the first switch, a magnitude of the first variable resistor, and a magnitude of the second variable resistor, wherein the first input terminal of the power conversion circuit is connected to a positive electrode of the charging unit, and the first output terminal of the power conversion circuit is connected to a positive electrode of the battery.

The power conversion circuit may further include a second switch connected between the first output terminal and the first input terminal, and when a magnitude of the first voltage and a magnitude of the second voltage are equal, the charging control unit may control the first switch to be turned off and control the second switch to be turned on.

When the magnitude of the first voltage and the magnitude of the second voltage are different, the charging control unit may control the first switch to be turned on and control the second switch to be turned off.

When the magnitude of the first voltage and the magnitude of the second voltage correspond to twice, the charging control unit may control the first variable resistor and the second variable resistor so that resistance values thereof are equal.

Another exemplary embodiment of the present disclosure provides a vehicle system for charging a battery with power from a charging system, the vehicle system including: a battery system including the battery and a battery management system (BMS) managing a state of the battery; a power conversion circuit including a first variable resistor connected between a first output terminal and a ground, and a second variable resistor and a first switch connected in series to each other between the first output terminal and a first input terminal, the power conversion circuit converting a first voltage of the power supplied by the charging system into a second voltage that is a driving voltage of the battery; and a vehicle control unit controlling a switching operation of the first switch, a magnitude of the first variable resistor, and a magnitude of the second variable resistor, wherein the first input terminal of the power conversion circuit is connected to a positive electrode of the charging system, and the first output terminal of the power conversion circuit is connected to a positive electrode of the battery.

The power conversion circuit may further include a second switch connected between the first output terminal and the first input terminal, and when a magnitude of the first voltage and a magnitude of the second voltage are equal, the vehicle control unit may control the first switch to be turned off and control the second switch to be turned on.

When the magnitude of the first voltage and the magnitude of the second voltage are different, the vehicle control unit may control the first switch to be turned on and control the second switch to be turned off.

When the magnitude of the first voltage and the magnitude of the second voltage correspond to twice, the vehicle control unit may control the first variable resistor and the second variable resistor so that resistance values thereof are equal.

Another exemplary embodiment of the present disclosure provides a charging gender for electrically connecting a vehicle system and a charging system to each other to charge a battery, the charging gender including: a power conversion circuit including a first variable resistor connected between a first output terminal and a ground, and a second variable resistor and a first switch connected in series to each other between the first output terminal and a first input terminal, the power conversion circuit converting a first voltage of power supplied by the charging system into a second voltage that is a driving voltage of the battery; and a gender control unit controlling a switching operation of the first switch, a magnitude of the first variable resistor, and a magnitude of the second variable resistor, wherein the first input terminal of the power conversion circuit is connected to a positive electrode of the charging system, and the first output terminal of the power conversion circuit is connected to a positive electrode of the battery.

The power conversion circuit may further include a second switch connected between the first output terminal and the first input terminal, and when a magnitude of the first voltage and a magnitude of the second voltage are equal, the gender control unit may control the first switch to be turned off and control the second switch to be turned on.

When the magnitude of the first voltage and the magnitude of the second voltage are different, the gender control unit may control the first switch to be turned on and control the second switch to be turned off.

When the magnitude of the first voltage and the magnitude of the second voltage correspond to twice, the gender control unit may control the first variable resistor and the second variable resistor so that resistance values thereof are equal.

### [Advantageous Effects]

By providing a common charging system, a common vehicle system, or a common charging gender, the present disclosure is capable of easily charging batteries between battery systems with batteries having various rated voltages and charging systems having various charging voltages.

By increasing convenience in charging batteries, the present disclosure is capable of increasing consumers' motivation to purchase electric vehicles.

The disclosure is capable of charging batteries of various electric vehicles with only one charging system, without having to provide a plurality of charging systems corresponding to rated voltages of a plurality of batteries, respectively, thereby reducing costs.

### [Description of the Drawings]

FIG. 1 is a diagram illustrating a charging system including a power conversion device according to an exemplary embodiment.
FIG. 2 is a diagram illustrating a vehicle system including a power conversion device according to another exemplary embodiment.
FIG. 3 is a diagram illustrating a charging gender including a power conversion device according to another exemplary embodiment.
FIG. 4 is a flowchart illustrating a battery charging method according to another exemplary embodiment.

### [Mode for Invention]

Hereinafter, exemplary embodiments disclosed in the present specification will be described in detail with reference to the accompanying drawings, and identical or similar components will be assigned the same or similar reference signs and redundant description thereof will be omitted. The suffixes "module" and/or "unit" for components used in the following description are given or used interchangeably only for easiness in writing the specification, and do not have distinctive meanings or roles in themselves. In addition, in describing the exemplary embodiments disclosed in the present specification, detailed descriptions of relevant known technologies will be omitted if they unnecessarily obscure the gist of the exemplary embodiments disclosed in the present specification. Further, it should be understood that the accompanying drawings are provided only to help easily understand the exemplary embodiments disclosed in the present specification, and the technical idea disclosed in the present specification is not limited by the accompanying drawings, and covers all modifications, equivalents, and substitutions within the spirit and the technical scope of the present disclosure.

Terms including ordinal numbers such as first and second may be used to describe various components, but these components are not limited by such terms. Such terms are used only for the purpose of distinguishing one component from another component.

It is to be understood that when one component is referred to as being "connected to" or "coupled to" another component, one component may be connected or coupled directly to another component or be connected or coupled to another component with an intervening component therebetween. On the other hand, it is to be understood that when one component is referred to as being "directly connected to" or "directly coupled to" another component, one component may be connected to another component with no intervening component therebetween.

It should be understood that terms "include", "have", and the like used in the present application specify the presence of features, numerals, steps, operations, components, parts, or combinations thereof mentioned in the specification, but do not preclude the presence or addition of one or more other features, numerals, steps, operations, components, parts, or combinations thereof.

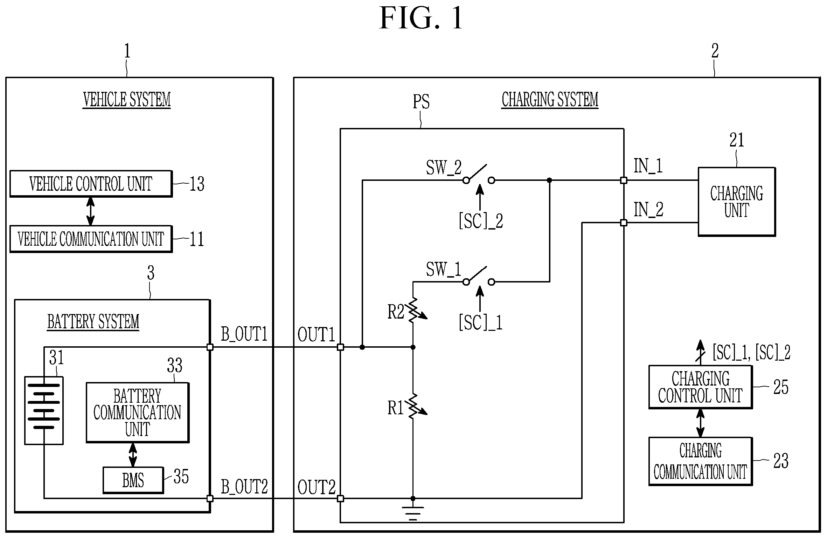

FIG. 1 is a diagram illustrating a charging system including a power conversion device according to an exemplary embodiment.

Referring to FIG. 1, an vehicle system 1 may be a higher-level system on which a battery system 3 is mounted. However, the exemplary embodiment are not limited to the vehicle system 1, and may also be applied to various higher-level systems on which the battery system 3 is mounted.

The vehicle system 1 includes a vehicle communication unit 11 and a vehicle control unit 13.

The vehicle communication unit 11 may include a communication module for communicating with each of a charging communication unit 23 of a charging system 2 and a battery communication unit 35 of the battery system 3. For example, the vehicle communication unit 11 may receive battery data including information about a state of a battery 31 from the battery communication unit 35, and transmit control signals for various switches in the battery system 3 to the battery communication unit 35. As another example, the vehicle communication unit 11 may receive various kinds of data collected in the process of charging the battery 31 from the charging communication unit 23, or transmit battery data received from the battery system 3 to the charging communication unit 23.

The vehicle control unit 13 may control the overall process of charging the battery 31. For example, the vehicle control unit 13 may check a state of each of the charging system 2 and the battery system 3, and transmit a control signal to each of the charging system 2 and the battery system 3 for smooth charging.

The battery system 3 may be a power source that supplies power to the vehicle system 1. The battery system 3 includes a battery 31, a battery communication unit 33, and a battery management system (hereinafter referred to as 'BMS') 35.

The battery 31 may include a plurality of battery cells connected to each other in series and in parallel. In some exemplary embodiments, the battery cell may be a rechargeable secondary battery. A predetermined number of battery cells may be connected to each other in series to form a battery module, a predetermined number of battery modules are connected to each other in series to form a battery pack, and a predetermined number of battery packs are connected to each other in parallel to form a battery bank, so that desired power is supplied. The battery 31 in which a plurality of battery cells are connected to each other in series is illustrated in FIG. 1, but the battery 31 is not limited thereto and may be configured in units of battery modules, battery packs, or battery banks.

The battery 31 may be a battery that provides high power to an external device (e.g., a motor). In FIG. 1, the battery 31 may be connected between two output terminals B_OUT1 and B_OUT2 of the battery system 3. The components and the connection relationships between the components shown in FIG. 1 are examples, and the disclosure is not limited thereto.

The battery communication unit 33 may include a communication module capable of communicating with the vehicle communication unit 11. For example, the battery communication unit 33 may transmit battery data including information about a state of the battery to the vehicle system 1 under the control of the BMS 35. As another example, the vehicle system 1 may receive various control signals from the battery communication unit 33.

The BMS 35 may manage and control the battery system 3 overall. In the process of charging the battery 31 with the power of the charging system 2, the battery 31 and the charging system 2 may be electrically connected to each other by controlling a battery relay unit (not illustrated) connected between one end of the battery 31 and at least one of the two output terminals B_OUT1 and B_OUT2 of the battery system 3.

The charging system 2 may include a power conversion device PS, a charging unit 21, a charging communication unit 23, and a charging control unit 25.

The power conversion device PS includes a circuit that converts a first voltage of power supplied by the charging system 2 into a second voltage that is a rated voltage of the battery 31. According to an exemplary embodiment, referring to FIG. 1, the power conversion device PS may be included in the charging system 2.

Referring to FIG. 1, the power conversion device PS may include a first switch SW_1, a second switch SW_2, a first variable resistor R1, and a second variable resistor R2. According to the exemplary embodiment, default values of the first variable resistor R1 and the second variable resistor R2 may be the same in a normal state that is a non-control state of the charging control unit 25.

For example, the first variable resistor R1 may be connected between a first output terminal OUT1 and a second output terminal OUT2 of the power conversion device PS. The second variable resistor R2 and the first switch SW_1 may be connected to each other in series between the first output terminal OUT1 of the power conversion device PS and a first input terminal IN_1 of the power conversion device PS. One end of the second variable resistor R2 may be connected to the first output terminal OUT1, and the other end of the second variable resistor R2 may be connected to one end of the first switch SW_1. The other end of the first switch SW_1 may be connected to the first input terminal IN_1 of the power conversion device PS. The second switch SW_2 may be connected between the first output terminal OUT1 and the first input terminal IN_1 of the power conversion device PS.

The first input terminal IN_1 of the power conversion device PS may be connected to a positive electrode of the charging unit 21. A second input terminal IN_2 of the power conversion device PS may be connected to a negative electrode of the charging unit 21. The first output terminal OUT1 of the power conversion device PS may be connected to a positive electrode of the battery 31. The second output terminal OUT2 of the power conversion device PS may be connected to a negative electrode of the battery 31.

The charging unit 21 may charge the battery 31 by supplying power to the battery 31. The charging unit 21 may be a power source. For example, the charging unit 21 may supply power of 800 V or 400 V to the battery 31. As another example, the battery 31 may be charged with power of 800 V or 400 V.

The charging communication unit 23 may include a communication module capable of communicating with the vehicle communication unit 11. For example, the charging communication unit 23 may transmit charging data including information on a magnitude of a charging current, a magnitude of a charging voltage, and the like to the vehicle communication unit 11 in real time or at predetermined intervals while charging is in progress under the control of the charging control unit 25.

The charging control unit 25 may control the overall charging process. According to the exemplary embodiment, the charging control unit 25 may control the switching of the plurality of switches SW_1 and SW_2 included in the power conversion device PS. The charging control unit 25 may control the magnitudes of the plurality of variable resistors R1 and R2 included in the power conversion device PS.

The charging control unit 25 may control whether to turn on or off the first switch SW_1 by transmitting a first switching control signal [SC]_1 to the first switch SW_1. The charging control unit 25 may control whether to turn on or off the second switch SW_2 by transmitting a second switching control signal [SC]_2 to the second switch SW_2.

The charging control unit 25 may change the magnitude of the charging current during charging to perform various charging methods. According to the exemplary embodiment, the charging control unit 25 may change the magnitude of the charging current by controlling the magnitudes of the first and second variable resistors R1 and R2. According to the exemplary embodiment, the charging control unit 25 may change the magnitudes of the first and second variable resistors R1 and R2 to match a magnitude of the first voltage, which is a charging voltage of the charging unit 21, and a magnitude of the second voltage, which is a rated voltage of the battery 31.

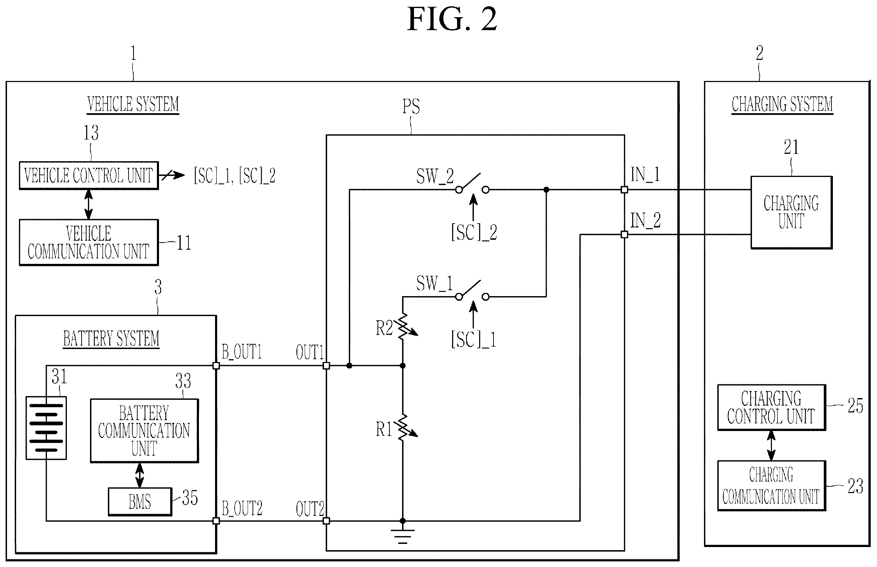

FIG. 2 is a diagram illustrating a vehicle system including a power conversion device according to another exemplary embodiment.

Although the power conversion device PS is illustrated outside the battery system 3 in FIG. 2, the power conversion device PS is not limited thereto, and may be located inside the battery system 3.

The vehicle system 1, the charging system 2, and the battery system 3 illustrated in FIG. 1 may correspond to a vehicle system 1, a charging system 2, and a battery system 3 illustrated in FIG. 2, respectively. For example, a plurality of components included in each of the vehicle system 1, the charging system 2, and the battery system 3 and the respective functions of the plurality of components are the same as those described with reference to FIG. 1, and detailed description thereof will be omitted.

While the power conversion device PS illustrated in FIG. 1 according to an exemplary embodiment is included in the charging system 2, the power conversion device PS illustrated in FIG. 2 according to another exemplary embodiment may be included in the vehicle system 1.

The vehicle control unit 13 of the vehicle system 1 may control the switching of the plurality of switches SW_1 and SW_2 included in the power conversion device PS, and the magnitudes of the plurality of variable resistors R1 and R2 included in the power conversion device PS. Although the power conversion device PS is illustrated outside the battery system 3 in FIG. 2, the power conversion device PS is not limited thereto, and may be located inside the battery system 3.

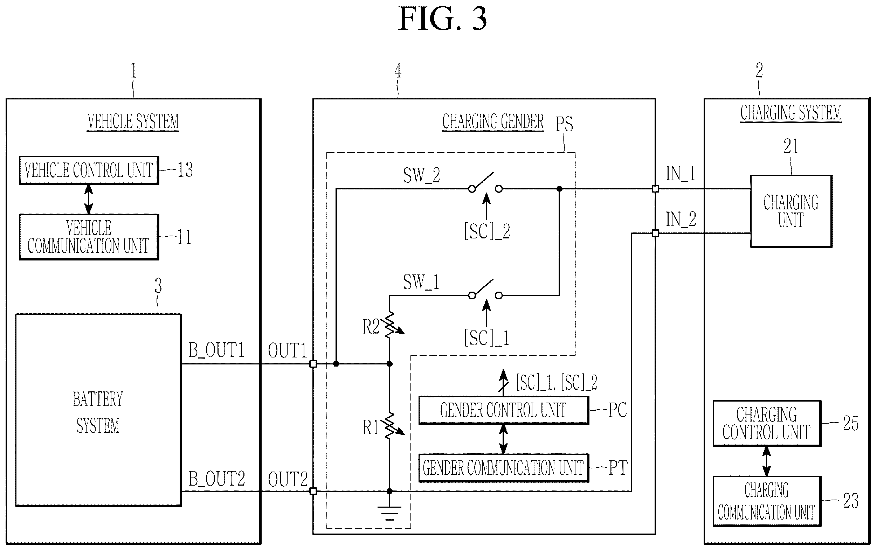

FIG. 3 is a diagram illustrating a charging gender including a power conversion device according to another exemplary embodiment.

The vehicle system 1, the charging system 2, and the battery system 3 illustrated in FIG. 1 may correspond to a vehicle system 1, a charging system 2, and a battery system 3 illustrated in FIG. 3, respectively. For example, a plurality of components included in each of the vehicle system 1, the charging system 2, and the battery system 3 and the respective functions of the plurality of components are the same as those described with reference to FIG. 1, and detailed description thereof will be omitted.

While the power conversion device PS illustrated in FIG. 1 according to an exemplary embodiment is included in the charging system 2, the power conversion device PS illustrated in FIG. 3 according to another exemplary embodiment may be included in a charging gender 4 that electrically connects the battery system 3 and the charging system 2 to each other.

The charging gender 4 may be a type of connector that connects the battery system 3 and the charging system 2 to each other to charge the battery 31. Referring to FIG. 3, the charging gender 4 may include a power conversion device PS, a gender communication unit **PT,** and a gender control unit PC. Here, the components of the power conversion device PS are the same as those described with reference to FIG. 1, and thus detailed description thereof will be omitted.

The gender communication unit PT may include a communication module capable of communicating with the vehicle communication unit 11 and the charging communication unit 23. For example, the gender communication unit PT may transmit charging data including information on a magnitude of a charging current, a magnitude of a charging voltage, and the like to the vehicle communication unit 11 in real time or at predetermined intervals while charging is in progress under the control of the gender control unit PC.

The gender control unit PC may control the switching of the plurality of switches SW_1 and SW_2 included in the power conversion device PS. The gender control unit PC may control the magnitudes of the plurality of variable resistors R1 and R2 included in the power conversion device PS.

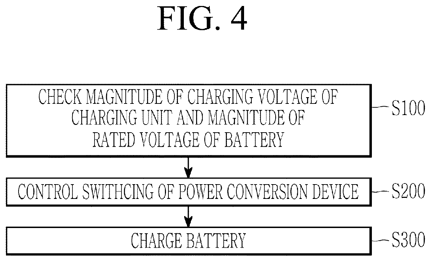

FIG. 4 is a flowchart illustrating a battery charging method according to another exemplary embodiment.

Referring to FIG. 4, the control unit checks a magnitude of a first voltage, which is a charging voltage of the charging unit 21, and a magnitude of a second voltage, which is a rated voltage of the battery 31 (S100).

According to an exemplary embodiment, in a case where the power conversion device PS is included in the charging system 2, the charging control unit 25 checks a magnitude of a first voltage, which is a charging voltage of the charging unit 21, and a magnitude of a second voltage, which is a rated voltage of the battery 31. For example, the charging control unit 25 may receive information about the magnitude of the second voltage from the vehicle system 1 through the charging communication unit 23.

According to another exemplary embodiment, in a case where the power conversion device PS is included in the vehicle system 1, the vehicle control unit 13 checks a magnitude of a first voltage, which is a charging voltage of the charging unit 21, and a magnitude of a second voltage, which is a rated voltage of the battery 31. For example, the vehicle control unit 13 may receive information about the magnitude of the first voltage from the charging system 2 through the vehicle communication unit 11.

According to another exemplary embodiment, in a case where the power conversion device PS is included in the charging gender 4, the gender control unit PC checks a magnitude of a first voltage, which is a charging voltage of the charging unit 21, and a magnitude of a second voltage, which is a rated voltage of the battery 31. For example, the gender control unit PC may receive information about the magnitude of the first voltage from the charging system 2 through the gender communication unit PT. In addition, the gender control unit PC may receive information about the magnitude of the second voltage from the vehicle system 1 through the gender communication unit PT.

Next, the control unit controls the plurality of switches SW_1 and SW_2 included in the power conversion device PS to match the magnitude of the first voltage and the magnitude of the second voltage (S200).

For example, it is assumed that the first voltage of the charging unit 21 is 800 V and the second voltage of the battery 31 is 400 V. Also, it is assumed that the default resistance values of the first and second variable resistors R1 and R2 are the same.

According to an exemplary embodiment, referring to FIG. 1, the charging control unit 25 may control the first switch SW_1 to be turned on. Then, power of 800 V output from the charging unit 21 may be changed to power of 400 V according to a ratio of the resistance values of the first and second variable resistors R1 and R2, and the power of 400 V may be supplied to the battery 31.

According to another exemplary embodiment, referring to FIG. 2, the vehicle control unit 13 may control the first switch SW_1 to be turned on. Then, power of 800 V output from the charging unit 21 may be changed to power of 400 V according to a ratio of the first variable resistor R1 and the second variable resistor R2, and the power of 400 V may be supplied to the battery 31.

According to another exemplary embodiment, referring to FIG. 3, the gender control unit PC may control the first switch SW_1 to be turned on. Then, power of 800 V output from the charging unit 21 may be changed to power of 400 V according to a ratio of the first variable resistor R1 and the second variable resistor R2, and the power of 400 V may be supplied to the battery 31.

As another example, it is assumed that the first voltage of the charging unit 21 and the second voltage of the battery 31 are both 800 V. Also, it is assumed that the default values of the first and second variable resistors R1 and R2 are the same.

According to an exemplary embodiment, referring to FIG. 1, the charging control unit 25 may control the second switch SW_2 to be turned on. Then, both ends of the charging system 2 and both ends of the battery system 3 may be connected to each other, and the power of 800 V output from the charging unit 21 may be supplied to the battery 31. That is, the charging power of the charging unit 21 may be supplied to the battery 31 without a voltage drop.

According to another exemplary embodiment, referring to FIG. 2, the vehicle control unit 13 may control the second switch SW_2 to be turned on. Then, both ends of the charging system 2 and both ends of the battery system 3 may be connected to each other, and the power of 800 V output from the charging unit 21 may be supplied to the battery 31. That is, the charging power of the charging unit 21 may be supplied to the battery 31 without a voltage drop.

According to another exemplary embodiment, referring to FIG. 3, the gender control unit PC may control the second switch SW_2 to be turned on. Then, both ends of the charging system 2 and both ends of the battery system 3 may be connected to each other, and the power of 800 V output from the charging unit 21 may be supplied to the battery 31. That is, the charging power of the charging unit 21 may be supplied to the battery 31 without a voltage drop.

As another example, it is assumed that the first voltage of the charging unit 21 is 900 V, and the second voltage of the battery 31 is 300 V. The control unit may control the magnitudes of the first and second variable resistors R1 and R2.

According to an exemplary embodiment, referring to FIG. 1, the charging control unit 25 may control the magnitudes of the first and second variable resistors R1 and R2 in such a manner that a ratio (e.g., 100Ω/(100Ω+200Ω) = 1/3) of the magnitude of the first variable resistor R1 to the total magnitude of the plurality of variable resistors R1 and R2 connected to each other in series is equal to the ratio (1/3) of the magnitude (300V) of the second voltage to the magnitude (900V) of the first voltage. For example, the charging control unit 25 may control the magnitudes of the first and second variable resistors R1 and R2 to be 100Ω and 200Ω, respectively. In addition, the charging control unit 25 may control the first switch SW_1 to be turned on. Then, the power of 900 V output from the charging unit 21 may be changed to power of 300 V according to the resistance distribution ratio between the first variable resistor R1 and the second variable resistor R2, and the power of 300 V may be supplied to the battery 31.

According to another exemplary embodiment, referring to FIG. 2, the vehicle control unit 13 may control the magnitudes of the first and second variable resistors R1 and R2 in such a manner that a ratio (e.g., 100Ω/(100Ω+200Ω) = 1/3) of the magnitude of the first variable resistor R1 to the total magnitude of the plurality of variable resistors R1 and R2 connected to each other in series is equal to the ratio (1/3) of the magnitude (300V) of the second voltage to the magnitude (900V) of the first voltage. For example, the charging control unit 25 may control the magnitudes of the first and second variable resistors R1 and R2 to be 100Ω and 200Ω, respectively. In addition, the vehicle control unit 13 may control the first switch SW_1 to be turned on. Then, the power of 900 V output from the charging unit 21 may be changed to power of 300 V according to the resistance distribution ratio between the first variable resistor R1 and the second variable resistor R2, and the power of 300 V may be supplied to the battery 31.

According to another exemplary embodiment, referring to FIG. 3, the gender control unit PC may control the magnitudes of the first and second variable resistors R1 and R2 in such a manner that a ratio (e.g., 100Ω/(100Ω+200Ω) = 1/3) of the magnitude of the first variable resistor R1 to the total magnitude of the plurality of variable resistors R1 and R2 connected to each other in series is equal to the ratio (1/3) of the magnitude (300V) of the second voltage to the magnitude (900V) of the first voltage. For example, the gender control unit PC may control the magnitudes of the first and second variable resistors R1 and R2 to be 100Ω and 200Ω, respectively. In addition, the gender control unit PC may control the first switch SW_1 to be turned on. Then, the power of 900V output from the charging unit 21 may be changed to power of 300 V according to the resistance distribution ratio between the first variable resistor R1 and the second variable resistor R2, and the power of 300 V may be supplied to the battery 31.

Next, the control unit controls the charging of the battery 31 (S300).

According to an exemplary embodiment, referring to FIG. 1, for example, it is assumed that the charging control unit 25 charges the battery 31 using a constant-current charging method. The charging control unit 25 may change the magnitude of the charging current supplied to the battery 31 by controlling the first variable resistor R1 and the second variable resistor R2.

According to another exemplary embodiment, referring to FIG. 2, it is assumed that the vehicle control unit 13 charges the battery 31 using a constant-current charging method. The vehicle control unit 13 may change the magnitude of the charging current supplied to the battery 31 by controlling the first variable resistor R1 and the second variable resistor R2.

According to another exemplary embodiment, referring to FIG. 3, it is assumed that the gender control unit PC charges the battery 31 using a constant-current charging method. The gender control unit PC may change the magnitude of the charging current supplied to the battery 31 by controlling the first variable resistor R1 and the second variable resistor R2.

Although the exemplary embodiments of the present disclosure have been described in detail above, the scope of the present disclosure is not limited thereto. Various modifications and improvements made by those having ordinary knowledge in the art to which the present disclosure pertains also fall within the scope of the present disclosure.

## Claims

1. A charging system for charging a battery mounted on a vehicle system, the charging system comprising:
a charging unit supplying power to the battery;
a power conversion circuit including a first variable resistor connected between a first output terminal and a ground, and a second variable resistor and a first switch connected in series to each other between the first output terminal and a first input terminal, the power conversion circuit converting a first voltage of the charging unit into a second voltage that is a rated voltage of the battery; and
a charging control unit controlling a switching operation of the first switch, a magnitude of the first variable resistor, and a magnitude of the second variable resistor,
wherein the first input terminal of the power conversion circuit is connected to a positive electrode of the charging unit, and
the first output terminal of the power conversion circuit is connected to a positive electrode of the battery.

2. The charging system of claim 1, wherein
the power conversion circuit further includes a second switch connected between the first output terminal and the first input terminal, and
when a magnitude of the first voltage and a magnitude of the second voltage are equal, the charging control unit controls the first switch to be turned off and controls the second switch to be turned on.

3. The charging system of claim 2, wherein
when the magnitude of the first voltage and the magnitude of the second voltage are different, the charging control unit controls the first switch to be turned on and controls the second switch to be turned off.

4. The charging system of claim 3, wherein
when the magnitude of the first voltage is twice the magnitude of the second voltage, the charging control unit controls the first variable resistor and the second variable resistor so that resistance values thereof are equal.

5. A vehicle system for charging a battery with power from a charging system, the vehicle system comprising:
a battery system including the battery and a battery management system (BMS managing a state of the battery;
a power conversion circuit including a first variable resistor connected between a first output terminal and a ground, and a second variable resistor and a first switch connected in series to each other between the first output terminal and a first input terminal, the power conversion circuit converting a first voltage of the power supplied by the charging system into a second voltage that is a rated voltage of the battery; and
a vehicle control unit controlling a switching operation of the first switch, a magnitude of the first variable resistor, and a magnitude of the second variable resistor,
wherein the first input terminal of the power conversion circuit is connected to a positive electrode of the charging system, and
the first output terminal of the power conversion circuit is connected to a positive electrode of the battery.

6. The vehicle system of claim 5, wherein
the power conversion circuit further includes a second switch connected between the first output terminal and the first input terminal, and
when a magnitude of the first voltage and a magnitude of the second voltage are equal, the vehicle control unit controls the first switch to be turned off and controls the second switch to be turned on.

7. The vehicle system of claim 6, wherein
when the magnitude of the first voltage and the magnitude of the second voltage are different, the vehicle control unit controls the first switch to be turned on and controls the second switch to be turned off.

8. The vehicle system of claim 7, wherein
when the magnitude of the first voltage is twice the magnitude of the second voltage, the vehicle control unit controls the first variable resistor and the second variable resistor so that resistance values thereof are equal.

9. A charging gender for electrically connecting a vehicle system and a charging system to each other to charge a battery, the charging gender comprising:
a power conversion circuit including a first variable resistor connected between a first output terminal and a ground, and a second variable resistor and a first switch connected in series to each other between the first output terminal and a first input terminal, the power conversion circuit converting a first voltage of power supplied by the charging system into a second voltage that is a rated voltage of the battery; and
a gender control unit controlling a switching operation of the first switch, a magnitude of the first variable resistor, and a magnitude of the second variable resistor,
wherein the first input terminal of the power conversion circuit is connected to a positive electrode of the charging system, and
the first output terminal of the power conversion circuit is connected to a positive electrode of the battery.

10. The charging gender of claim 9, wherein
the power conversion circuit further includes a second switch connected between the first output terminal and the first input terminal, and
when a magnitude of the first voltage and a magnitude of the second voltage are equal, the gender control unit controls the first switch to be turned off and controls the second switch to be turned on.

11. The charging gender of claim 10, wherein
when the magnitude of the first voltage and the magnitude of the second voltage are different, the gender control unit controls the first switch to be turned on and controls the second switch to be turned off.

12. The charging gender of claim 11, wherein
when the magnitude of the first voltage is twice the magnitude of the second voltage, the gender control unit controls the first variable resistor and the second variable resistor so that resistance values thereof are equal.
